# EUROPÄISCHE PATENTSCHRIFT

(11) **EP 2 679 967 B1**
(45) Veröffentlichungstag und Bekanntmachung des Hinweises auf die Patenterteilung: **12.08.2015**
(21) Anmeldenummer: 13174182.9
(22) Anmeldetag: 28.06.2013
(51) Int. Cl.: G01G 19/04, G01G 23/37

(54) **Vorrichtung zur Messung und Anzeige des Zuladegewichts eines Schienenfahrzeugs**
Device for measuring and displaying the payload of a rail vehicle
Dispositif de mesure et d'affichage du poids de chargement d'un véhicule ferroviaire

(30) Priorität: 30.06.2012 DE 102012013110
(43) Veröffentlichungstag der Anmeldung: 01.01.2014
(73) Patentinhaber: Franz Kaminski Waggonbau GmbH, 31785 Hameln (DE)
(72) Erfinder: Brand, Dirk Winfried, 31139 Hildesheim (DE)
(74) Vertreter: Wördemann, Hermes

(56) Entgegenhaltungen:
- DE-A1- 3 702 638
- US-A1- 2010 200 307

## Beschreibung

Die Erfindung betrifft eine Vorrichtung zur Messung und Anzeige des Zuladegewichts eines Schienenfahrzeugs.

Beim Betrieb schienengebundener Güterfahrzeuge ist es erforderlich, die zulässige Beladung sowie eine ausgeglichene Beladung einzuhalten, um bei Zweiachsern beide Achsen beziehungsweise bei Mehrachsern beide Drehgestelle gleichermaßen zu belasten. Die Überprüfung des Beladezustandes kann zum Beispiel durch Gleiswaagen erfolgen. Dazu werden die beladenen Güterfahrzeuge auf stationäre Gleiswaagen zur Überprüfung gefahren. Bei diesem Verfahren geschieht das Wiegen jedoch nach dem Beladen, so dass keine unmittelbare Kontrolle des Beladungszustandes beim Beladen gegeben ist.

Aus DE 3702638 A1 ist ein Verfahren zur Überwachung der Beladung von Fahrzeugen bekannt sowie eine zugeordnete Anzeige. Bei diesem Verfahren werden belastungsbedingte Fahrzeugbeladungen an beiden Fahrzeugenden gemessen und die Messwerte vergleichbar angezeigt. Dazu werden die aus der pneumatischen Bremsentechnik für Schienenfahrzeuge bekannten Wiegeventile verwendet, welche dem Erstellen von fahrzeugbeladungsabhängigen, pneumatischen Drücken dienen.

Aus DE OS 1801047 ist eine Vorrichtung zum Feststellen des Beladezustandes von Fahrzeugen bekannt, bei der der die Zuladung aufnehmende Teil eines Fahrzeuges über Druckmessdosen am Fahrzeug abgestützt ist. Die Druckmessdosen sind mit die Höhe des Druckes anzeigenden Geräten verbunden. Die Druckmessdosen können als elektrische Messinstrumente bzw. Dehnungsmessstreifen ausgebildet sein, um das auf den einzelnen Druckmessdosen lastende Gewicht zu summieren und die Summe auf ein einziges Anzeigegerät zu übertragen.

Aus US 6 441 324 ist die Messung des Zuladegewichts eines Güterwaggons bekannt, bei dem ein Sensor zur Messung des Zuladegewichts eines mit Drehgestell ausgebildeten Güterfahrzeuges offenbart ist. Der Sensor ist dabei Teil des Drehgestells mittig zwischen den Doppelachsen angeordnet. Der auf dem Drehgestell aufliegende Waggon wird dort gefedert. Diese Art der Messung ist abhängig von der Federsteifigkeit bzw. Dehnung der Feder des Drehgestells. Durch den zentralen Aufbau des Drehgestells findet hier eine Entkopplung von der Biegung des Aufliegers zum Drehgestell statt.

Ein weiteres Dokument aus dem Stand der Technik ist US 2010/0200307.

Der Erfindung liegt die Aufgabe zugrunde, eine Vorrichtung zur Messung und Anzeige des Zuladegewichts eines Schienenfahrzeugs anzugeben, dass eine kontrollierte Beladung eines Schienenfahrzeugs ermöglicht.

Diese Aufgabe wird durch eine Vorrichtung mit den im Anspruch 1 angegebenen Merkmalen gelöst.

Weiterbildungen und vorteilhafte Ausgestaltungen der Erfindung ergeben sich aus den weiteren Ansprüchen, der Beschreibung und der Zeichnung.

Erfindungsgemäß umfasst die Vorrichtung einen Messsensor, der auf einen Biegebalken auf einem Längsträgers eines Drehgestells mittig montiert wird. Jedes Drehgestell eines Fahrzeugs erhält die gleiche Ausstattung.

Die Vorrichtung besteht in der ersten Ausführung aus Dehnungsmessstreifen-Sensoren, die auf je einem Biegebalken angeordnet sind. Jeweils ein Biegebalken wird mit Montageblechen mittig auf je einem Längsträger des Drehgestells zwischen den Achsen montiert. Vorzugsweise werden die Montagebleche auf den Längsträge aufgeschweißt. Jeder Dehnungsmessstreifen-Sensor ist mit je einer Auswerteelektronik verbunden, die vorzugsweise auf dem zugeordneten Längsträger angebracht ist. Die Auswerteelektronik besteht aus einem Messverstärker, einer Anzeige und einem Funkmodul. Durch das Funkmodul kann eine Kommunikation zu den anderen Messstellen hergestellt werden. Nach Montage der Sensoren erfolgt eine Kalibrierung mittels Eichgewichte. Bei entsprechender Kalibrierung der Sensoren ist die Ermittlung der Achslast möglich. Durch die Anordnung der Sensoren beidseitig auf den Drehgestellen ist zudem eine Gewichtsverteilung auf dem Fahrzeug bestimmbar.

Die Auswerteelektronik kann außerdem die ermittelten Daten zu je einer Warnampel pro Drehgestell funken, die je nach Ladezustand in verschiedenen Farben blinken können. Die Warnampeln sind an einer beliebigen gut sichtbaren Stelle angebracht und zeigen vorzugsweise den Ladezustand je Drehgestell separat an.

In einer weiteren Ausgestaltung der Erfindung werden die Messergebnisse über ein Tracking-Modul, bestehend aus einem Mobilfunksender in Kombination mit einem GPS-System an einen entfernten Empfänger bzw. Server übertragen. Das Tracking-Modul mit Funktransceiver kann vorzugsweise in einem Lagerdeckel mit Laufleistungszähler, wie er in DE 10 2006 005 597 beschrieben ist, oder an einer anderen beliebigen Stelle am Fahrzeug montiert werden.

Mit der erfindungsgemäßen Vorrichtung ist eine komplexe Steuerung für Züge auf Strecken mit unterschiedlichen Ladegewichtsgrenzen möglich.

Die Energieversorgung der einzelnen Module kann durch Batteriebetrieb, Generatorstromversorgung, Energy-Harvesting oder Solarzellen geschehen.

In einer vereinfachten Ausführung der Erfindung kann je Drehgestell nur ein Sensor mit zugehöriger Auswerteelektronik auf einer Seite des Drehgestells vorgesehen werden.

Nachfolgend wird ein Ausführungsbeispiel der Erfindung anhand der Zeichnung näher erläutert.

In der Zeichnung zeigen:
- Figur 1: Messanordnung am Drehgestell in Seitenansicht;
- Figur 2: Messanordnung in Draufsicht;
- Figur 3a: Montageblech mit Sensor, Seitenansicht;
- Figur 3b: Montageblech mit Sensor, Ansicht von unten.

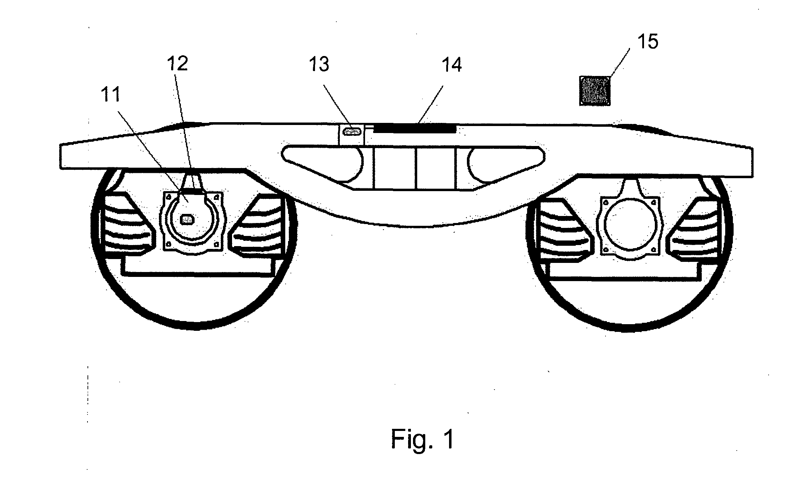

Die Figur 1 zeigt eine Messanordnung am Drehgestell 17 in Seitenansicht. Die Vorrichtung besteht aus einem Dehnungsmessstreifen-Sensor 14, die auf den Biegebalken angeordnet sind. Jeweils ein Biegebalken wird mit Montageblechen auf einen Längsträger 16 des Drehgestells mittig zwischen den Achsen montiert. Jeder Dehnungsmessstreifen-Sensor 14 ist mit je einer Auswerteelektronik 13 verbunden, die vorzugsweise auf dem Längsträger angebracht ist. Die Auswerteelektronik besteht aus einem Messverstärker, einer Anzeige und einem Funkmodul. Durch das Funkmodul kann eine Kommunikation zu den anderen Messstellen hergestellt werden. Bei entsprechender Kalibrierung ist die Ermittlung der Achslast möglich, weil die Gewichtsverteilung auf dem Fahrzeug bestimmt werden kann. Die Auswerteelektronik 13 kann außerdem die ermittelten Daten zu einer Warnampel 15 funken, die je nach Ladezustand in verschiedenen Farben blinken kann.

In einer weiteren Ausgestaltung der Erfindung können die Messergebnisse der Auswerteelektronik 13 über ein Tracking-Modul, bestehend aus einem Mobilfunksender in Kombination mit einem GPS-System an einen entfernten Empfänger bzw. Server übertragen werden. Das Tracking-Modul mit Funktransceiver kann vorzugsweise in einem Lagerdeckel 11 mit Laufleistungszähler, wie er in DE 10 2006 005 597 beschrieben ist, oder an einer anderen beliebigen Stelle am Fahrzeug montiert werden.

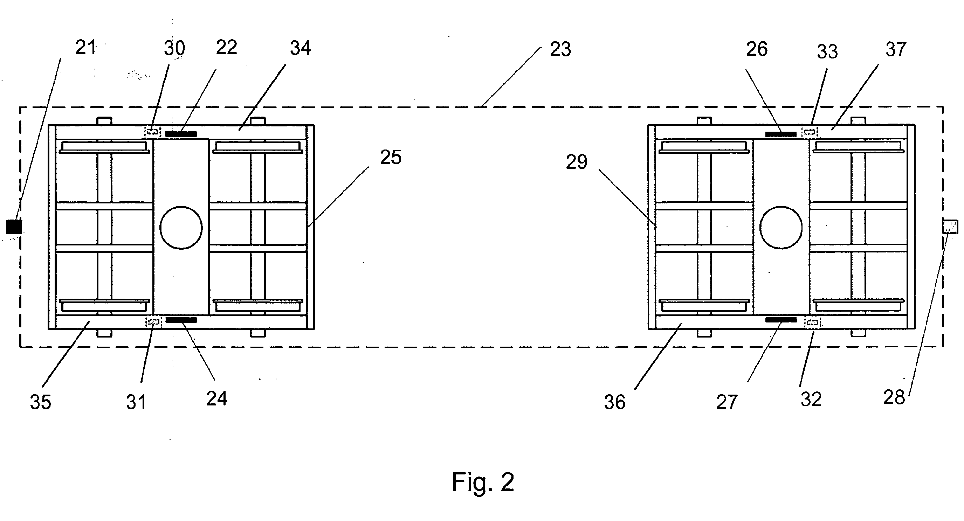

Figur 2 zeigt ein Güterfahrzeug 23 mit zwei Drehgestellen 25, 29. Dehnungsmessstreifen-Sensoren 22, 24, 26, 27 sind mittels Biegebalken auf Längsträgern 34, 35, 36, 37 angeordnet. Jedem Dehnungsmessstreifen-Sensoren 22, 24, 26, 27 ist eine Auswerteelektronik 30, 31, 32, 33 zugeordnet, welche den jeweiligen Beladungszustand ermittelt. An je einem Ende des Güterfahrzeugs 23 ist eine Warnampel 21, 28 sichtbar angeordnet, die, vorzugsweise per Funk, mit der Auswerteelektronik 30, 31, 32, 33 verbunden ist. Die Warnampel 21, 28 kann den Beladezustand vorzugsweise je Drehgestell anzeigen, beispielsweise in unterschiedlichen Farben oder in gut sichtbaren Zahlen.

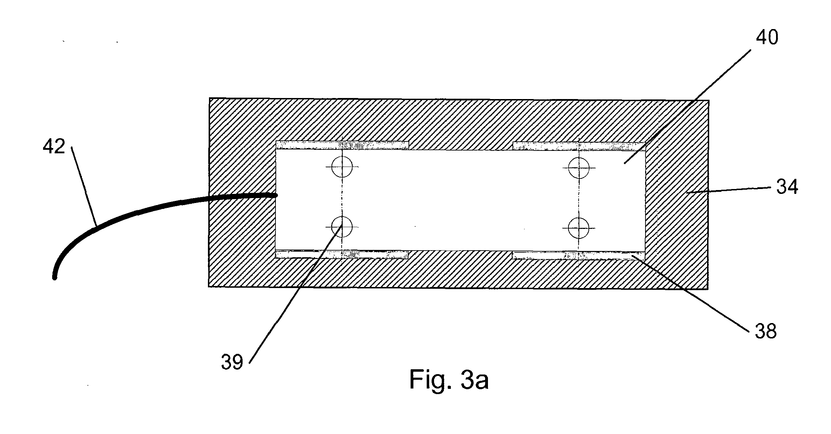

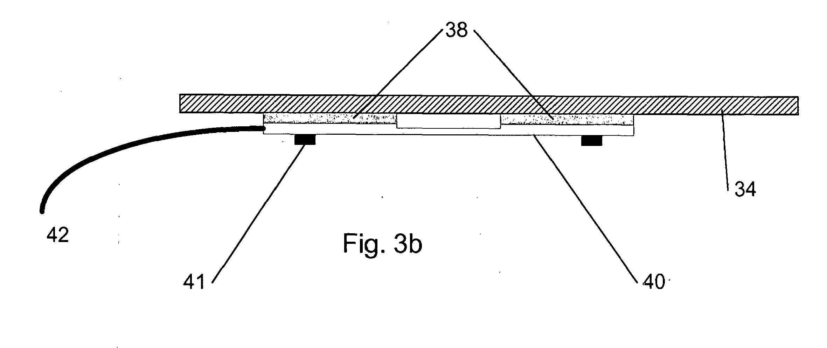

Figur 3a, 3b zeigen Montagebleche 38 mit Sensor 40 in Seitenansicht sowie von unten. Pro Sensor 40 werden zwei Montagebleche 38 mit Gewindeloch auf den Längsträger 34 - 37 geschweißt, wobei die Montagebleche den für eine Auswertung erforderlichen Abstand zueinander aufweisen. Durch Schrauben 41 durch Durchführungslöcher 39 wird der Dehnungsmessstreifen-Sensor 40 mit den Montageblechen 38 verspannt. Ein Kabel 42 führt vom Dehnungsmessstreifen-Sensor 40 zur zugeordneten Auswerteelektronik 30-33. Um eine passgenaue Anordnung von Gewindebohrung in den Montageblechen 38 und den Durchführungslöcher 39 zu erzielen, kann vor dem Verschweißen der Montagebleche 38 mit dem Längsträger 34 - 37 eine nicht gezeichnet Montagehilfe eingesetzt werden.

### Bezugszeichenliste

- 11: Lagerdeckel
- 12: Antenne
- 13: Auswerteelektronik
- 14: Dehnungsmessstreifen-Sensor
- 15: Warnampel
- 16: Längsträger
- 17: Drehgestell
- 21: Warnampel
- 22: Dehnungsmessstreifen-Sensor
- 23: Güterfahrzeug
- 24: Dehnungsmessstreifen-Sensor
- 25: Drehgestell
- 26: Dehnungsmessstreifen-Sensor
- 27: Dehnungsmessstreifen-Sensor
- 28: Warnampel
- 29: Drehgestell
- 30: Auswerteelektronik
- 31: Auswerteelektronik
- 32: Auswerteelektronik
- 33: Auswerteelektronik
- 34: Längsträger
- 35: Längsträger
- 36: Längsträger
- 37: Längsträger
- 38: Montageblech
- 39: Durchführungsloch
- 40: Sensor
- 41: Schraube
- 42: Kabel

## Patentansprüche

1. Vorrichtung zur Messung und Anzeige des Zuladegewichts eines Güterfahrzeugs (23) mittels Messsensoren, wobei das Güterfahrzeug (23) ein Drehgestell (17; 25, 29) mit je zwei Achsen aufweist, wobei die Achsen mittels Längsträger (34 - 37) miteinander verbunden sind, **dadurch gekennzeichnet, dass** Dehnungsmessstreifen-Sensoren (14; 22, 24, 26, 27) mittels Biegebalken mittig auf den Längsträgern (34 - 37) zwischen den Achsen angeordnet sind, dass jeder Dehnungsmessstreifen-Sensor (14; 22, 24, 26, 27) mit je einer Auswerteelektronik (13; 30 - 33) verbunden ist, dass die Auswerteelektronik (13; 30 - 33) aus mindestens einem Messverstärker, einer Anzeige und einem Funkmodul besteht, und dass die einem Dehnungsmessstreifen-Sensor (14; 22, 24, 26, 27) zugeordnete Auswerteelektronik (13; 30 - 33) auf dem zugeordneten Längsträger (34 - 37) angebracht ist.

2. Vorrichtung nach Anspruch 1, **dadurch gekennzeichnet, dass** die Auswerteelektronik (13; 30 - 33) eingerichtet ist, die ermittelten Daten zu einer Warnampel (15; 21, 28) zu funken, die sichtbar an einem Ende des Güterfahrzeugs (23) angeordnet ist und den Beladungszustand entweder in Zahlen oder unterschiedlichen Farben anzeigt.

3. Vorrichtung nach einem der voranstehenden Ansprüche, **dadurch gekennzeichnet, dass** die Auswerteelektronik (13; 30 - 33) mit einem Tracking-Modul, insbesondere bestehend aus einem Mobilfunksender in Kombination mit einem GPS-System, verbunden ist.

4. Vorrichtung nach Anspruch 3, **dadurch gekennzeichnet, dass** das Tracking-Modul mit Funktransceiver in einem Lagerdeckel (11) mit Laufleistungszähler montiert ist.

5. Vorrichtung nach einem der voranstehenden Ansprüche, **dadurch gekennzeichnet, dass** die Auswerteelektronik (13; 30 - 33) und/oder das Tracking-Modul durch Batteriebetrieb, Generatorstromversorgung, Energy-Harvesting oder Solarzellen mit Energie versorgt werden.

## Claims

1. A device for the measurement and display of the payload of a goods vehicle (23) by means of measuring sensors, wherein the goods vehicle (23) has a pivoting bogie (17; 25, 29) with two axles, wherein the axles are connected with one another by means of longitudinal beams (34 - 37), **characterised in that**, strain gauge sensors (14; 22, 24, 26, 27) are arranged by means of bending beams centrally between the axles on the longitudinal beams (34 - 37), **in that** each strain gauge sensor (14; 22, 24, 26, 27) is connected with an evaluation electronics system (13; 30 - 33), **in that** the evaluation electronics system (13; 30 - 33) consists of at least one measurement amplifier, one display and one radio module, and **in that** the evaluation electronics system (13; 30 - 33) associated with a strain gauge sensor (14; 22, 24, 26, 27) is mounted on the associated longitudinal beam (34 - 37).

2. The device according to claim 1, **characterised in that**, the evaluation electronics system (13; 30 - 33) is equipped so as to radio the data determined to a warning light (15; 21, 28), which is visibly arranged at one end of the goods vehicle (23), and displays the loading status in either numbers or various colours.

3. The device according to one of the preceding claims, **characterised in that**, the evaluation electronics system (13; 30 - 33) is connected with a tracking module, consisting in particular of a mobile radio transmitter in combination with a GPS system.

4. The device according to claim 3, **characterised in that**, the tracking module with a radio transceiver is mounted in a bearing cover (11) with a mileage counter.

5. The device according to one of the preceding claims, **characterised in that**, the evaluation electronics system (13; 30 - 33) and/or the tracking module is supplied with power by means of battery operation, a generator power supply, energy harvesting, or solar cells.

## Revendications

1. Dispositif pour mesurer et afficher le poids de chargement d'un véhicule de marchandises (23) à l'aide de capteurs de mesure, dans lequel le véhicule de marchandises (23) présente un boggie (17 ; 25, 29) avec respectivement deux axes, dans lequel les axes sont reliés ensemble à l'aide de supports longitudinaux (34 - 37), **caractérisé en ce que** des capteurs à jauge de contrainte (14 ; 22, 24, 26, 27) sont disposés au moyen de barres de flexion, de manière centrale, sur les supports longitudinaux (34 - 37) entre les axes, **en ce que** chaque capteur à jauge de contrainte (14 ; 22, 24, 26, 27) est relié à une électronique d'évaluation (13 ; 30 - 33) respective, **en ce que** l'électronique d'évaluation (13 ; 30 - 33) se compose d'au moins un amplificateur de mesure, d'un afficheur et d'un module radio, et **en ce que** l'électronique d'évaluation (13 ; 30 - 33) associée à un capteur à jauge de contrainte (14 ; 22, 24, 26, 27) est aménagée sur le support longitudinal (34 - 37) associé.

2. Dispositif selon la revendication 1, **caractérisé en ce que** l'électronique d'évaluation (13 ; 30 - 33) est étudiée pour radiotélégraphier les données déterminées à l'attention d'un feu de détresse (15 ; 21, 28) qui est disposé de manière visible à une extrémité du véhicule de marchandises (23) et affiche l'état de chargement en chiffres ou en différentes couleurs.

3. Dispositif selon l'une des revendications précédentes, **caractérisé en ce que** l'électronique d'évaluation (13 ; 30 - 33) est reliée à un module de suivi se composant en particulier d'un émetteur radio mobile en combinaison avec un système GPS.

4. Dispositif selon la revendication 3, **caractérisé en ce que** le module de suivi avec émetteur-récepteur radio est monté dans un chapeau de palier (11) avec compteur de parcours.

5. Dispositif selon l'une des revendications précédentes, **caractérisé en ce que** l'électronique d'évaluation (13 ; 30 - 33) et/ou le module de suivi peut être alimenté en énergie par fonctionnement d'une batterie, alimentation électrique de générateur, captage d'énergie ou des cellules solaires.
